# EUROPEAN PATENT APPLICATION

(11) **EP 4 364 622 A2**
(43) Date of publication of application: **08.05.2024**
(21) Application number: 24153287.8
(22) Date of filing: 22.06.2022
(51) Int. Cl.: A47J 43/08

(54) **BOWL ASSEMBLY FOR A MICRO PUREE MACHINE**

(30) Priority: 25.06.2021 US 202163215144 P; 17.06.2022 US 202217843106
(62) Divisional of application: 22744047.6
(71) Applicant: SharkNinja Operating LLC, Needham, MA 02494 (US)
(72) Inventor: DENG, Xu Sheng, Needham, Massachusetts 02494 (US); JONES, Zinitis, Needham, Massachusetts 02494 (US); O'LOUGHLIN, Nicholas, M., Needham, Massachusetts 02494 (US); POWER, Michelle Hilary, Needham, Massachusetts 02494 (US)
(74) Representative: Carroll, Christopher P.

(57) **Abstract**

A device for processing ingredients including a beaker removably couplable to the device, a blade assembly, and a mixing shaft configured to removably attach to the blade assembly. The mixing shaft and the blade assembly are configured to translate along an axis while the beaker is rotated about the axis.

## Description

### FIELD OF THE INVENTION

The present disclosure relates to a food processing device and, more particularly, to a bowl assembly of a micro puree machine for making frozen foods and drinks.

### BACKGROUND

Home use machines that are intended to make ice creams, gelatos, frozen yogurts, sorbets and the like are known in the art. Typically, a user adds a series of non-frozen ingredients to a beaker. The ingredients are then churned by a paddle while a refrigeration mechanism simultaneously freezes the ingredients. These devices have known shortcomings including, but not limited to, the amount of time and effort required by the user to complete the ice cream making process. Machines of this nature are impractical for preparing most non-dessert food products.

An alternative type of machine known to make a frozen food product is a micro-puree machine. Typically, machines of this nature spin and plunge a blade into a pre-frozen ingredient or combination of ingredients. While able to make frozen desserts like ice creams, gelatos, frozen yogurts, sorbets and the like, micro puree style machines can also prepare non-dessert types of foods such as non-dessert purees and mousses. In addition, consumers can prepare either an entire batch of ingredients or a pre-desired number of servings.

Some current micro puree machines have both a position motor subassembly for moving the spinning blade up and down relative to the ingredients, and a separate drive motor subassembly for rotating the blade. In these cases, the drive motor subassembly may be required to move up and down with the position motor subassembly, complicating the internal drive mechanisms.

### SUMMARY

This disclosure describes a micro puree machine having a spinning bowl assembly, which solves the problems of the prior art. The bowl assembly includes a beaker removeably attachable to a beaker coupling located inside a bowl. The beaker coupling operatively couples to a rotation motor subassembly for rotation of the beaker coupling (and hence the beaker) relative to the bowl while the mixing blade for mixing ingredients remains stationary. The bowl in turn locks onto a bayonet structure on a base of the micro puree machine, which secures the bowl in position on the base while the beaker coupling and the beaker rotate.

Implementations of the micro puree machine of this disclosure may include one or more of the following, in any suitable combination.

In some implementations, a micro puree machine of this disclosure includes a bowl assembly. The bowl assembly includes a beaker configured to receive ingredients therein. The beaker has a bottom surface that includes at least one first alignment structure. A beaker coupling is configured to receive the beaker therein. The beaker coupling has an upper surface that includes at least one second alignment structure. A bowl is configured to receive the beaker coupling and the beaker therein. The beaker coupling is operatively coupled to a drive motor for rotation about an axis relative to the bowl. The at least one first alignment structure is complementary to the at least one second alignment structure such that, when the beaker is positioned within the beaker coupling, the at least one first alignment structure and the at least one second alignment structure prevent rotation of the beaker relative to the beaker coupling.

In further implementations, the bowl has a bottom surface that includes at least one coupling member configured to receive and attach to a portion of a platform of the micro puree machine. In implementations, the beaker has an upper rim that defines an outwardly projecting lip along a portion of the rim. In implementations, the at least one second alignment structure extends upward into a beaker volume defined by the beaker. In implementations, the at least one second alignment structure is positioned closer to an outer circumference of the beaker coupling than to a central axis of the beaker coupling. In implementations, the at least one first alignment structure creates a void on the exterior bottom surface of the beaker. In implementations, the at least one first alignment structure and the at least one second alignment structure are generally rectangular. In implementations, the at least one first alignment structure comprises at least three first alignment structures. In implementations, the at least one second alignment structure comprises at least three second alignment structures. In implementations, the beaker coupling is attached to a drive motor coupling of the drive motor.

In certain implementations, a method of operating a micro puree machine of this disclosure includes positioning a beaker within a beaker coupling of the micro puree machine. The beaker is configured to receive ingredients therein. The beaker has a bottom surface that includes at least one first alignment structure. The beaker coupling has an upper surface that includes at least one second alignment structure. The beaker coupling is located within a bowl. The method also includes attaching the bowl to a platform of the micro puree machine. The beaker coupling is operatively coupled to a drive motor for rotation about an axis relative to the bowl. The at least one first alignment structure is complementary to the at least one second alignment structure such that, when the beaker is positioned within the beaker coupling, the at least one first alignment structure and the at least one second alignment structure prevent rotation of the beaker relative to the beaker coupling.

In further implementations, the bowl has a bottom surface that includes at least one coupling member configured to receive and attach to a portion of the platform of the micro puree machine. In implementations, the beaker has an upper rim that defines an outwardly projecting lip along a portion of the rim. In implementations, the at least one second alignment structure extends upward into a beaker volume defined by the beaker. In implementations, the at least one second alignment structure is positioned closer to an outer circumference of the beaker coupling than to a central axis of the beaker coupling. In implementations, the at least one first alignment structure creates a void on the exterior bottom surface of the beaker. In implementations, the at least one first alignment structure includes at least three first alignment structures. In implementations, the at least one second alignment structure includes at least three second alignment structures. In implementations, the beaker coupling is attached to drive motor coupling of the drive motor.

A reading of the following detailed description and a review of the associated drawings will make apparent the advantages of these and other structures. Both the foregoing general description and the following detailed description serve as an explanation only and do not restrict aspects of the disclosure as claimed.

### BRIEF DESCRIPTION OF THE DRAWINGS

Reference to the detailed description, combined with the following figures, will make the disclosure more fully understood, wherein:
FIGS. 1 and 2 show a micro puree machine of this disclosure according to some implementations;
FIGS. 3 shows a blade assembly of this disclosure according to some implementations;
FIGS. 4A and 4B show a beaker assembly of this disclosure in an assembled view (FIG. 4A) and a disassembled view (FIG. 4B) according to some implementations;
FIG. 4C shows a cross-sectional view of the beaker assembly of this disclosure according to some implementations;
FIGS. 5A and 5B illustrate a platform (FIG. 5A) and a bowl attachable to the platform (FIG. 5B) of this disclosure according to some implementations; and
FIG. 6 shows a cross-sectional view of the bowl assembly of this disclosure according to some implementations.

### DETAILED DESCRIPTION

In the following description, like components have the same reference numerals, regardless of different illustrated implementations. To illustrate implementations clearly and concisely, the drawings may not necessarily reflect appropriate scale and may have certain structures shown in somewhat schematic form. The disclosure may describe and/or illustrate structures in one implementation, and in the same way or in a similar way in one or more other implementations, and/or combined with or instead of the structures of the other implementations.

In the specification and claims, for the purposes of describing and defining the invention, the terms "about" and "substantially" represent the inherent degree of uncertainty attributed to any quantitative comparison, value, measurement, or other representation. The terms "about" and "substantially" moreover represent the degree by which a quantitative representation may vary from a stated reference without resulting in a change in the basic function of the subject matter at issue. Open-ended terms, such as "comprise," "include," and/or plural forms of each, include the listed parts and can include additional parts not listed, while terms such as "and/or" include one or more of the listed parts and combinations of the listed parts. Use of the terms "top," "bottom," "above," "below" and the like helps only in the clear description of the disclosure and does not limit the structure, positioning and/or operation of the feed chute assembly in any manner.

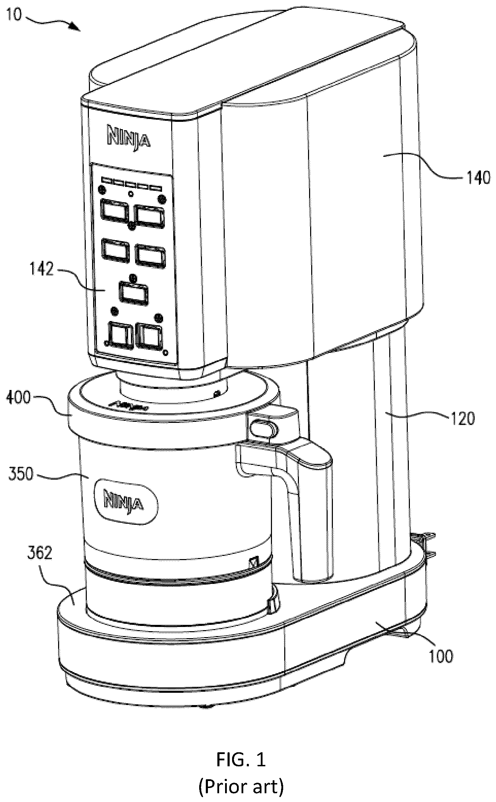

FIG. 1 shows an isometric view of a micro puree machine 10 according to an illustrative implementation of the present disclosure. The micro puree machine 10 may include a lower housing or base 100 and an upper housing 140. A middle housing 120 may extend between the lower housing 100 and the upper housing 140. The upper housing 140 may include an interface 142 for receiving user inputs to control the micro puree machine 10 and/or display information. The micro puree machine 10 may also include a removable bowl 350 and a lid 400 coupled to the bowl 350. The bowl 350 may contain one or more pre-frozen ingredients for processing. A user may place the bowl 350 and the lid 400 on the lower housing 100. The user then may rotate the bowl 350 and the lid 400 on a lifting platform 362 from a down position to an up position, and vice versa.

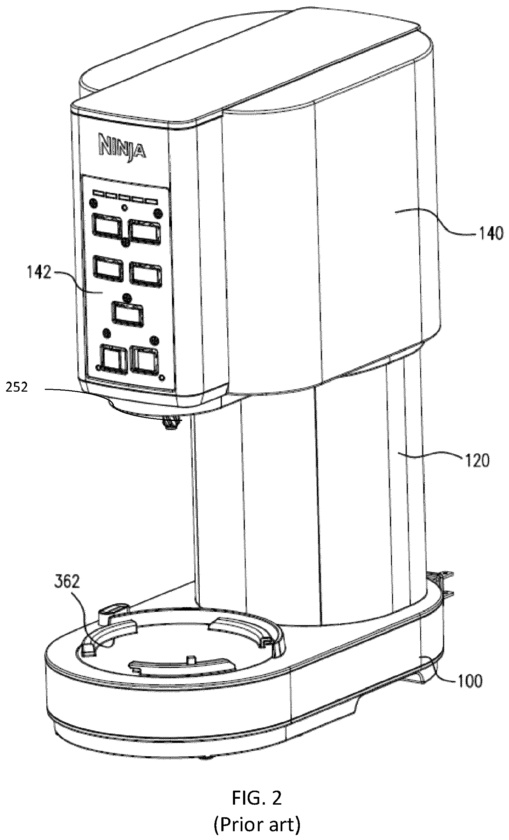

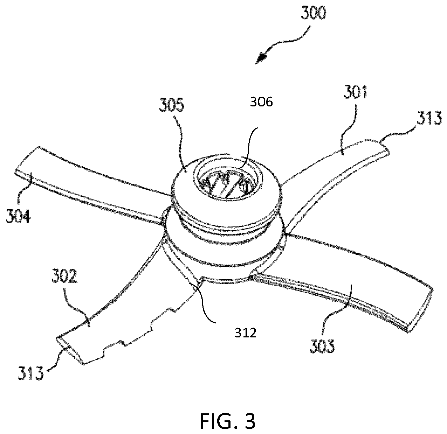

FIG. 2 shows the micro puree machine 10 of FIG. 1 with the bowl 350 removed for ease of illustration. When the user raises the bowl 350 and the lid 400 vertically to the up position, a blade 300 (FIG. 3) within the lid 400 engages with a mixing shaft 252 extending from the upper housing 140. The mixing shaft 252 delivers a rotational force to the blade 300 to spin one or more blades as they engage with ingredients inside the bowl 350. Further non-limiting implementations of the micro puree machine 10 are described in U.S. Patent No. 11,154,163 to SharkNinja Operating, LLC (Needham, MA).

FIG. 3 shows an isometric view of an implementation of the blade 300 of this disclosure. Implementations of the blade 300 can comprise a unitary structure or distinct structures joined together either directly or indirectly. In implementations, the material of the blade 300 may comprise cast stainless steel with a PVD titanium coating. The blade 300 may comprise one or more cutting arms 301, 302 (for example, two as shown) and one or more mixing arms 303, 304 (for example, two as shown). The blade 300 may further comprise a central support hub 305. The cutting arms 301, 302 and the mixing arms 303, 304 extend outward from the central support hub 305. The central support hub 305 may define a central opening 306 for accepting the mixing shaft 252 (FIG. 2). The cutting arms 301 and 302 may comprise a horizontally extending length having a proximal end 312 and a distal end 313. The proximal end 312 may meet the central support hub 305. Likewise, mixing arms 303, 304 may extend from the central support hub 305 and may be generally positioned in an opposing orientation. In implementations, the blade 300 may be configured to move up and down with the vertical movement of the mixing shaft 252 relative to the upper housing 140.

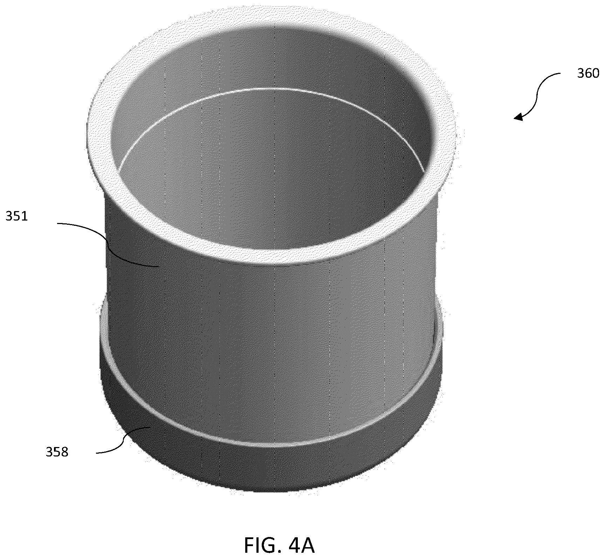

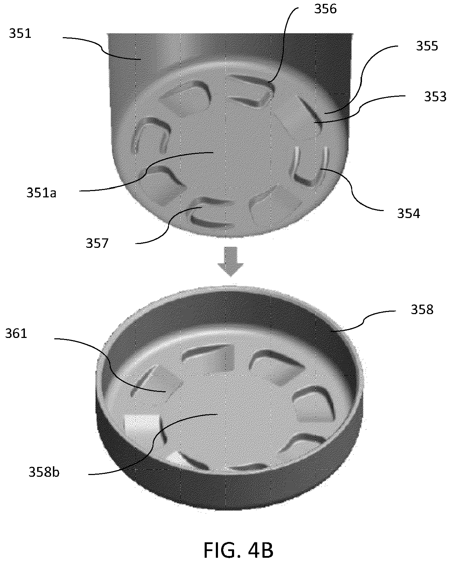

FIGS. 4A and 4B illustrates an implementation of the beaker assembly 360 of this disclosure in an assembled view (FIG. 4A) and a disassembled view (FIG. 4B). As shown in FIG. 4A, the beaker assembly 360 may include a beaker 351 and a beaker coupling 358. In implementations, the beaker assembly 360 is sized to fit within the bowl 350 (FIG. 1). As shown in FIG. 4B, the beaker 351 may have one or more alternating beaker alignment structures 353, 354 on the bottom surface 351a of the beaker 351. The beaker alignment structures 353, 354 may be generally rectangular and may create a void on the exterior bottom surface of the beaker 351. In implementations, the number of coupling structures 353, 354 is at maximum eight structures 353, 354, as shown. However, the disclosure also contemplates as few as three structures 353, 354. In an illustrative implementation, the beaker alignment structures 353 have a peripheral wall 355 that meets the bottom surface 351a of the beaker 351 at an angle. The alignment structures 354 have a peripheral wall 356 that creates a vertical face 357. Once the beaker 351 is joined with the beaker coupling 358, the vertical face 357 prevents rotation of the beaker 351 relative to the beaker coupling 358 when the moving blade assembly 300 is operating during use of the device. The beaker alignment structures 353, 354 also prevent ingredients from rotational movement relative to the beaker 351 in the direction of the movement of the beaker 351 during use. In some implementations, the beaker 351 can be manufactured from a disposable material to enhance the convenience of using the micro puree machine 10. Further, the beaker 351 can be sold as a stand-alone item, and further can be prefilled with ingredients to be processed during use of the micro puree machine 10.

Still referring to FIGS. 4A and 4B, the top surface 358b of the beaker coupling 358 may comprise one or more alignment structures 361 that extend upward into the beaker 351. The alignment structures 361 may be generally rectangular and may engage with the alignment structures 353, 354 on the bottom surface 351a of the beaker 351. The vertical faces 357 of the beaker alignment structures 354 may abut the beaker coupling alignment structures 361 to prevent the relative rotational movement of the beaker 351 within the beaker coupling 358 during use of the micro puree machine 10. The alignment structures 361 may be positioned closer to an outer circumference of the beaker coupling 358 than to a central axis of the beaker coupling 358.

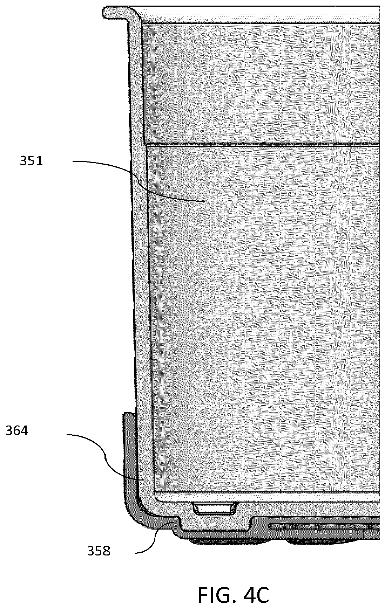

FIG. 4C shows a cross-sectional view of the beaker 351 assembled to the beaker coupling 358 according to an implementation of this disclosure. As shown in FIG. 4C, a height of a wall 364 of the beaker coupling 358 may be selected to aid in the fixing of the beaker 351 to prevent the beaker 351 from moving during rotation of the beaker coupling 358.

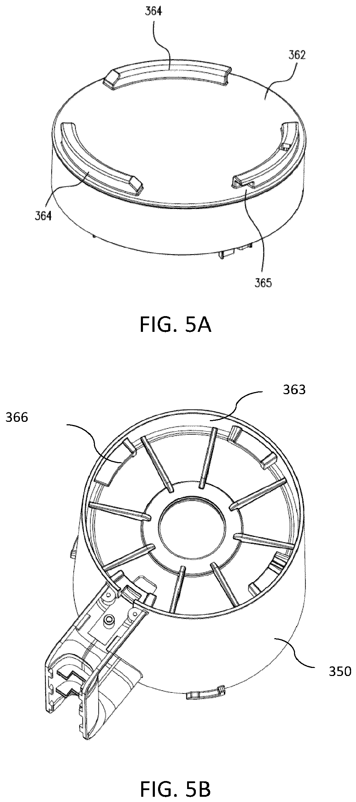

FIG. 5A is an isometric view of the top of the lifting platform 362 according to an implementation of this disclosure. FIG. 5B is an isometric view of the bowl 350, which may be coupleable to the lifting platform 362. For example, as shown in FIG. 5B, the bowl 350 may comprise locating and locking elements for positioning and connecting the bowl 350 to the top of the lifting platform 362. For example, as can be seen in FIG. 5B, the underside of the bowl 350 may comprise one or more indentations 363 sized to receive corresponding projections 364 on the top of the lifting platform 362. At least one such projection on the top of the lifting platform 362 may comprise a cutaway 365 to receive a corresponding ledge 366 on the bowl 350 when the bowl 350 is rotated on the lifting platform 362, locking the bowl 350 and the lifting platform 362 together.

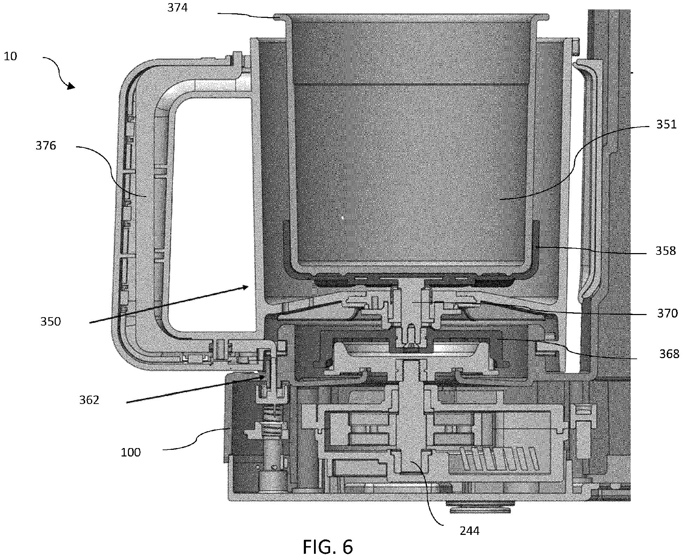

FIG. 6 illustrates a cross-sectional view of the beaker 351 and beaker coupling 358 inserted into the bowl 350 according to an implementation of this disclosure. In implementations, the beaker coupling 351 may attach to a drive motor coupling 368, which is operatively coupled to a drive motor 244 via a shaft 370 for rotation of the beaker coupling 368 (and hence the beaker 351) within the bowl 350. In implementations, when the beaker 351 is coupled to the beaker coupling 351, an outward facing flange 374 extends above the bowl 350 to act as a gripping surface for the ease of removal of the beaker 351 from the bowl 350. Activation of the drive motor occurs 244 when an interlock lever 376 integrated into a handle 378 of the bowl 350 which depresses a micro-switch located in the base 100 of the micro puree machine 10.

While the disclosure particularly shows and describes preferred implementations, those skilled in the art will understand that various changes in form and details may exist without departing from the spirit and scope of the present application as defined by the appended claims. The scope of this present application intends to cover such variations. As such, the foregoing description of implementations of the present application does not intend to limit the full scope conveyed by the appended claims.

## Claims

1. A device for processing ingredients comprising:
a beaker removably couplable to the device:
a blade assembly; and
a mixing shaft configured to removably attach to the blade assembly;
wherein the mixing shaft and the blade assembly are configured to translate along an axis while the beaker is rotated about the axis.

2. The device of claim 1, wherein the axis is a vertical axis.

3. The device of claim 1, further comprising a beaker coupling configured to receive the beaker therein, the beaker coupling operatively coupled to a drive motor for rotating the beaker and the beaker coupling about the axis.

4. The device of claim 3, wherein the beaker coupling is attached to a drive motor coupling of the drive motor.

5. The device of claim 3, wherein each of the beaker and the beaker coupling comprise corresponding features configured to prevent rotation of the beaker relative to the beaker coupling.

6. The device of claim 3, further comprising a bowl configured to receive the beaker coupling and the beaker therein.

7. The device of claim 6, wherein the bowl comprises a bottom surface that includes at least one coupling member configured to receive and attach to a portion of a platform of the device.

8. The device of claim 3, wherein the beaker comprises a bottom surface that includes at least one first alignment structure and the beaker coupling comprises an upper surface that includes at least one second alignment structure, and wherein the at least one first alignment structure is complementary to the at least one second alignment structure such that, when the beaker is positioned within the beaker coupling, the at least one first alignment structure and the at least one second alignment structure prevent rotation of the beaker relative to the beaker coupling.

9. The device of claim 8, wherein the at least one second alignment structure extends upward into a beaker volume defined by the beaker.

10. The device of claim 8, wherein the at least one second alignment structure is positioned closer to an outer circumference of the beaker coupling than to a central axis of the beaker coupling.

11. The device of claim 8, wherein the at least one first alignment structure creates a void on the exterior bottom surface of the beaker.

12. The device of claim 8, wherein the at least one first alignment structure comprises at least three first alignment structures.

13. The device of claim 8, wherein the at least one second alignment structure comprises at least three second alignment structures.

14. The device of claim 8, wherein the at least one first alignment structure is generally rectangular.

15. The device of claim 8, wherein the at least one second alignment structure is generally rectangular.
